# EUROPEAN PATENT SPECIFICATION

(11) **EP 0 545 995 B1**
(45) Date of publication and mention of the grant of the patent: **19.04.1995**
(21) Application number: 91915123.3
(22) Date of filing: 16.08.1991
(51) Int. Cl.: A22C 15/00

(54) **METHOD AND ARRANGEMENT FOR PREPARING A PACKAGED SUBSTANCE FOR SMOKING AND/OR OTHER TREATMENT**
VERFAHREN UND ANORDNUNG ZUM VORBEREITEN EINER VERPACKTEN SUBSTANZ ZUM RÄUCHERN UND/ODER EINER ANDEREN BEHANDLUNG
PROCEDE ET SYSTEME DE PREPARATION AU FUMAGE ET/OU PAR UN AUTRE TRAITEMENT D'UNE SUBSTANCE EMBALLEE

(30) Priority: 31.08.1990 NL 9001927
(43) Date of publication of application: 16.06.1993
(73) Proprietor: KLOPPENBURG, Herman Daniel, NL-7556 GV Hengelo (NL)
(72) Inventor: KLOPPENBURG, Herman Daniel, NL-7556 GV Hengelo (NL)
(74) Representative: Bartelds, Erik
(86) International application number: NL9100154
(87) International publication number: WO9203929

(56) References cited:
- EP-A- 0 129 864
- EP-A-03 308 57
- Bi-o-ch em J V
- DE-A-34 378 30
- DE-C- 3 930 876
- FR-A- 2 619 285
- FR-A- 2 638 942
- In-t-. Arc h.

## Description

The present invention relates to a method for preparing a packaged substance, in particular meat, for smoking and/or other treatment, comprising mechanically placing the substance in a plurality of packagings, mechanically closing each packaging and fixing a suspending loop thereto, mechanically opening each suspending loop and picking up each closed packaging on its suspending loop, mechanically transporting each packaging to a supplied carrier and threading each suspending loop thereon by mechanically moving the suspending loop to a predetermined position on the carrier, and finally mechanically discharging the filled carrier, as well as to an arrangement for performing this method. Such a method and arrangement are known from FR-A-2 619 285.

It is generally known to prepare packaged meat such as for example sausages, hams and the like in the described manner to be smoked and/or to undergo other (heat) treatments. The thus prepared meat is then carried suspended in the rack to an area where it is smoked and/or subjected to other (heat) treatment. Threading the packaged meat onto the carrier and hanging the filled carriers in the rack is however a very laborious and monotonous occupation which, considering the nature of the movements required, can moreover easily lead to the occurrence of back complaints and ultimately even to incapacity for work.

These drawbacks are partially obviated by the method described in FR-A-2 619 285, which discloses a method for mechanically transporting and threading a plurality of sausages onto a carrier. The packagings, which have been mechanically filled and provided with suspending loops are supplied separately lying on a conveyor belt, after which their loops are picked up by suction and openend and they are hoisted by their loops to a threading hook, which pulls them over a carrier to a predetermined position. This prior art document does not disclose opening the loop upon attachment thereof to the packaging, but rather relies on a fairly complicated procedure for opening the suspending loops, which may have different orientations when on the conveyor belt. Furthermore, the lying transport of the sausages on the conveyor belt may leave marks on their surfaces.

Another automated method of transporting and threading sausages is disclosed in EP-A-0 129 864, where packagings are filled with meat, closed and provided with a suspending loop, and wherein a gripper portion of a guide rail is inserted in the suspending loop upon attachment thereof to the packaging. The packaging is then transported on a conveyor belt towards a carrier, dragging the loop along the rail. The rail is connected to the carrier, which is cantilevered and inclined, and thus upon reaching the carrier the loop slides therealong due to gravity.

The above method also has some drawbacks, the most important being that the movement of the packagings along the carrier is not controlled, leading to irregular spacing of the packagings and consequently uneven treatment of the packagings. Furthermore, due to the cantilevered and inclined arrangement of the carrier, further treatment steps involving the carrier do not lend themselves to mechanisation. Further, the contact with the conveyor belt may leave exterior marks on the sausages.

The present invention therefore has for its object to provide a method of the type described in the preamble of claim 1, wherein these drawbacks do not occur. According to the invention this is achieved in that each suspending loop is held open from the moment it is fixed to the packaging, in that each packaging is separately picked up by its suspending loop upon closure of the packaging, and in that the discharged carrier is mechanically hung in a rack. By mechanically performing a number of heavy and unpleasant operations in this way, job satisfaction is increased and production costs are moreover reduced. In addition, a better product is thus obtained since the meat can be threaded onto the carrier at regular intervals in a simple manner.

Preferably, each packaging is handled exclusively by its attached suspending loop during transport and threading. In this way, marks on the surfaces of the packagings are avoided.

During threading the suspending loop and the packaging preferably remain free from the carrier. This is particularly important with round sausages, such as for example smoked sausages, where it can occur that because the suspending loop and the carrier touch during threading the sausage is rotated slightly whereby not the loop but a part of the sausage comes to rest on the carrier. This results after smoking in white specks at the places where the sausage has rested on the carrier. Such specks render the sausage unsaleable.

The carrier is preferably a standard carrier as used in the meat industry. By using such standard carriers with a generally Y-shaped, round or square profile, the costs of applying the method according to the invention are minimal.

When the carriers are supplied and discharged transversely of their lengthwise direction, the operations can take place in a comparatively small space.

The invention further has for its object to provide an arrangement for performing the above method. According to the invention this is achieved by an arrangement comprising a device known perse for mechanically filling a plurality of packagings with the substance and fixing a suspending loop to each filled packaging, a device placed in series with the mechanical filling device for mechanically threading the filled packagings onto carriers, comprising means for separately picking up each packaging on an attached suspending loop and moving it to a predetermined position on the carrier, and a device placed in series with the mechanical threading device for mechanically discharging the carriers, characterized in that the filling device comprises means for attaching a suspending loop to the packaging and means co-acting with the suspending loop attachment means for holding the loop open and for separately picking up each filled packaging by its suspending loop, and in that the device for discharging the carriers is arranged for mechanically hanging the carriers in a rack.

In a preferred embodiment, the threading device is arranged for handling each packaging exclusively by its attached suspending loop.

The arrangement of the invention is particularly effective when the holding open means comprise a bending spring co-acting with a mould of the closing means and a jaw arranged in the vicinity of the mould.

The threading device preferably comprises means for separately transporting the filled, closed packagings out of a discharge opening of the filling device on their suspending loop, and means for placing the packagings and the carriers in the correct mutual position.

The transporting means prefably comprise a transporting arm pivotable about at least one axis. A compact device is hereby obtained.

When the transporting arm has a forked outer end with reversed V-shaped sectional profile, a packaging taken out of the filling device is always correctly oriented and can be transferred in a simple manner.

The positioning means preferably comprise means for supplying the carriers to a threading position and at least one transporting hoook movable along a track connecting the transporting means and the threading position. The use of of transporting hooks movable along a track provides great flexibility in the location of the threading position with respect to the filling device. When the transporting hook has at least two hook parts movable relative to one another, the suspending loop of the packaging can be properly held open and held in place.

When the transporting hook comprises a controllable release device and the positioning means comprise an operating member co-acting with the release device, the operating member and the threading position being displaceable relative to one another, it is ensured that succesive transporting hooks each leave behind a filled packaging on the carrier at the correct distance from its predecessor.

The hanging device preferably comprises means for discharging filled carriers from the threading position and means for hanging the discharged carriers at mutual spacings in a rack.

The discharging means preferably comprise at least one pivotable parallelogram. A desired discharging movement is thus obtained in a simple manner.

Finally, the invention further relates to a filling device and a hanging device for use in the above arrangement.

Mentioned and other features of the method and arrangement according to the invention will be elucidated hereinafter in the light of a number of embodiments, wherein reference is made ot a drawing in which corresponding components are designated with corresponding reference numerals, and in which:
Fig. 1 shows a perspective view of an arrangement according to the invention, wherein the filling device is depicted schematically;
fig. 2 is a schematic view of the filling of a packaging with meat;
fig. 3 shows a schematic perspective view of the first fase of closing the filled packaging;
fig. 4 shows a schematic perspective view of the second phase of closing;
fig. 5 shows a schematic perspective view of the third phase of closing;
fig. 6 shows a schematich perspective view of the fourth phase of closing;
fig. 7 shows a partially cut away, perspective view of the jaw of the filling device during opening of the suspending loop;
fig. 8 is a perspective view of the jaw with held open suspending loop;
fig. 9 is a schematic perspective view of the transporting means of the threading device according to the invention;
fig. 10 shows a partially broken away, perspective view of a transporting hook according to the invention;
fig. 11 shows a schematic side view of a portion of the threading device and the hanging device according to the invention;
fig. 12 shows a schematic perspective view of a second embodiment of the threading device;
fig. 13 is a schematic perspective view of the third embodiment of the threading device; and
fig. 14 shows a schematic perspective view of a fourth embodiment of the threading device.

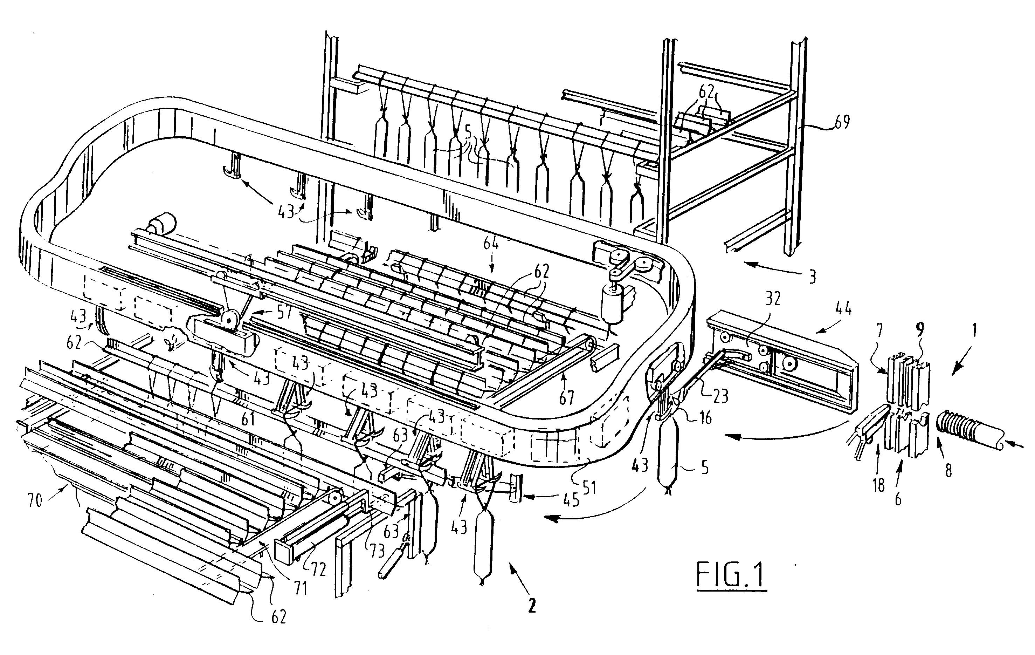

An arrangement according to the invention for preparing packaged meat for smoking and/or other (heat) treatment comprises a filling device 1 (fig. 1), a threading device 2 placed in series therewith and a hanging device 3 placed in series with the threading device 2.

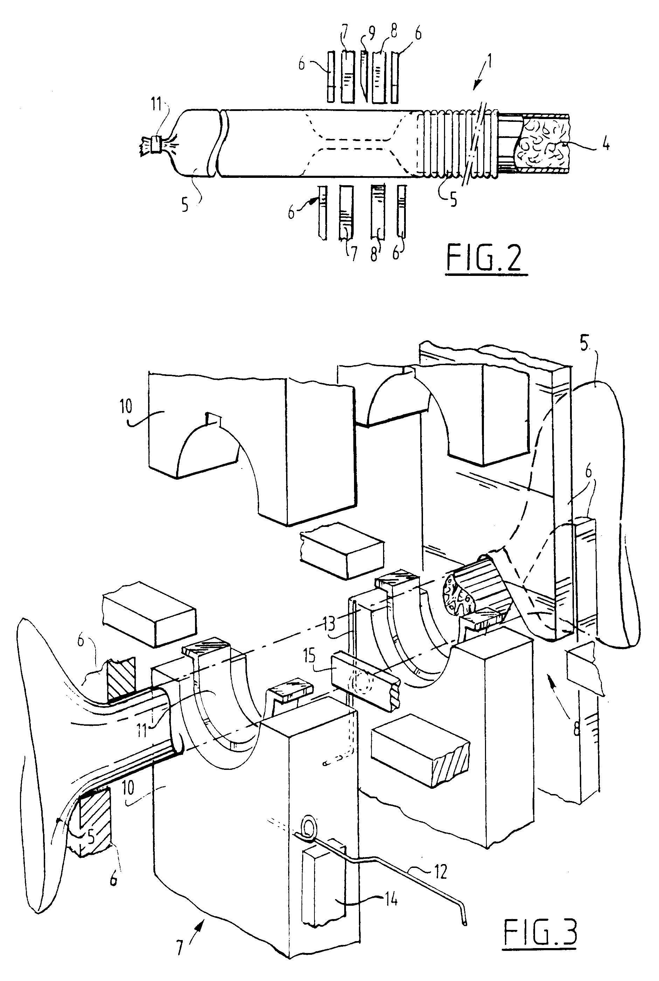

In the filling device 1 (fig. 2) meat 4 is pressed into a packaging 5 by pressing means (not shown here). When the packaging 5 is filled it is pinched together by jaws 6 which then move away from each other in the pressing direction, after which the filled packaging 5 is closed by closing means 7. Means 8 corresponding with the closing means 7 close off the leading portion of a following packaging 5, whereafter cutting means 9 mutually separate the filled packaging and the packaging for filling 5.

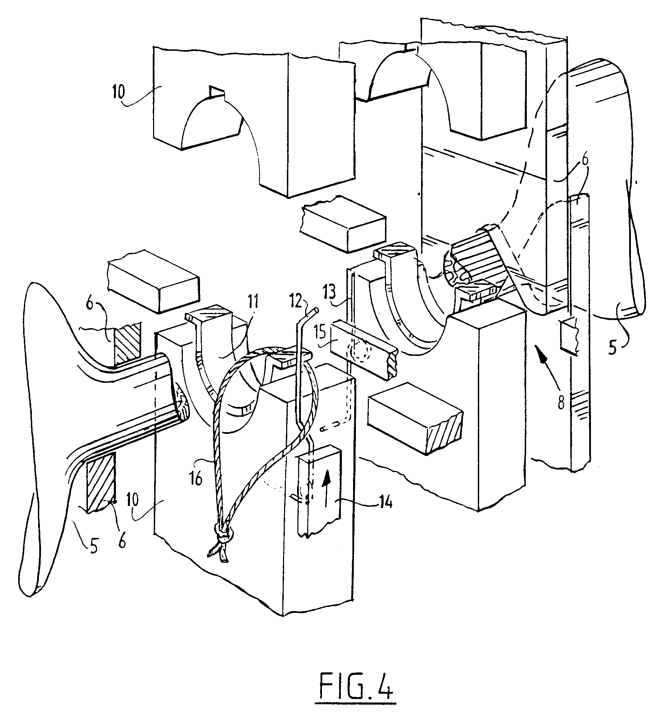

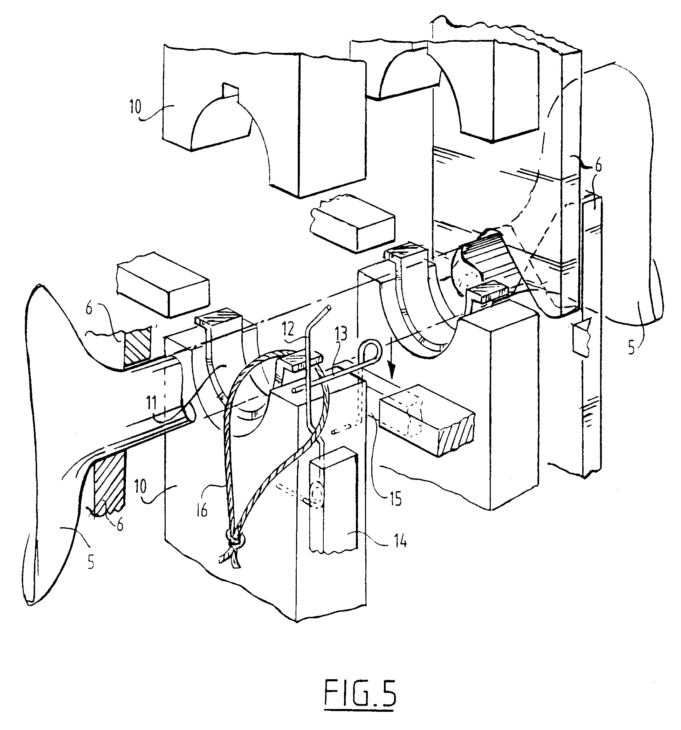

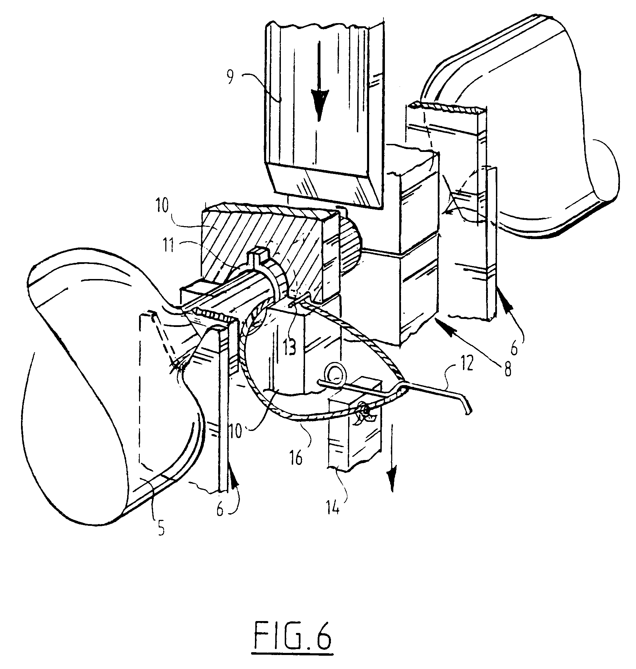

The closing means 7 comprise two moulds 10 (fig. 3) movable towards one another, between which is situated a deformable, generally metal closer 11. Fixed to the lower mould 10 are two bending springs 12,13, the bending movement of which is controlled by associated movable stops 14, 15. When the filled packaging 5 is held fixedly by the jaws 6 (fig. 3), the first movable stop 14 associated with the first bending spring 12 is moved upward (fig. 4). A suspending loop 16 is then placed over the still open closer 11 and the first bending spring 12 now oriented along the mould 10. The second movable stop 15 associated with the second bending spring 13 is then moved downward (fig. 5), whereby the second bending spring 13 fixedly clamps the loop 16 onto the bottom mould 10. The moulds are now moved toward one another whereby the closer 11 is closed and the suspending loop 16 is fixed thereto (fig. 6). Due to the upward movement of the lower mould 10 the first bending spring 12 arranged therein is moved upward relative to its associated stop 14, whereby it can spring out again. Owing to the specific U-shape of the upright leg of the bending spring 12, the loop 16 is carried with it when it springs out, whereby the loop is pulled open. The cutting means 9 now move down and separate the filled packaging from the packaging for filling 5.

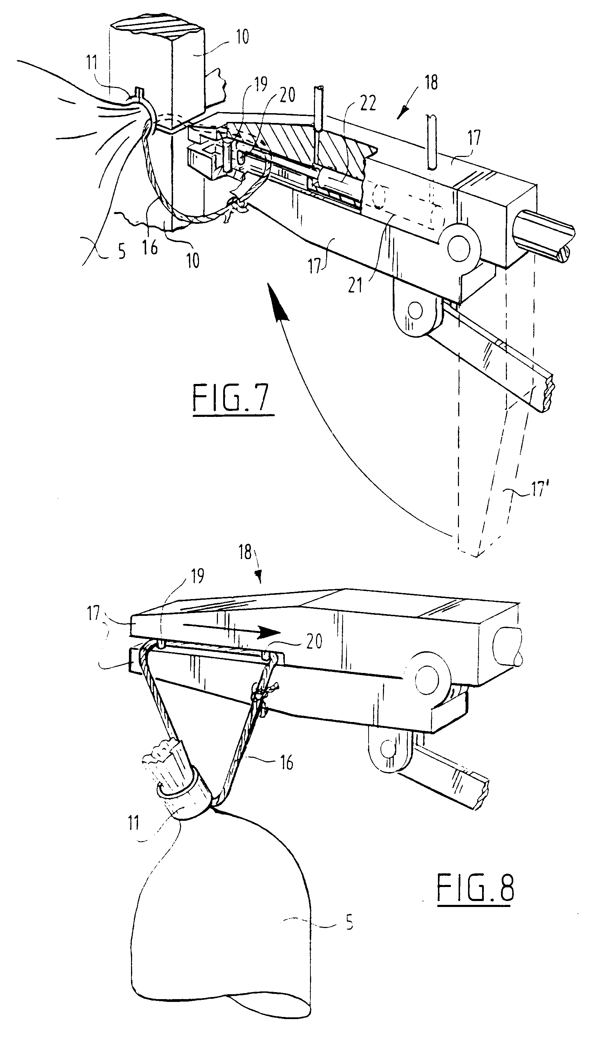

The suspending loop 16 held open by the first bending spring 12 is now picked up by gripping members 17 of a jaw 18 (fig. 7) closing around the loop 16. The gripping members 17 are connected in their closed position by two pins 19, 20, whereof the one 19 is attached to one of the gripping members 17 and the other 20 is received slidably therein and is connected to a piston 22 movable in a pneumatic cylinder 21. When the moulds 10 are moved apart the pin 20 is moved under pneumatic pressure in the direction of the pivot point of the jaw 18, whereby the suspending loop 16 is transferred in the open position from the mould 10 into the jaw 18 (fig. 8). Instead of being pneumatically controlled the pins 19, 20 can, of course also be (electro)magnetically or otherwise controlled.

Although the description relates to packagings with an individual suspending loop, the invention is also applicable in the case of round sausages, such as smoked sausages, wherein the suspending loop 16 is formed by a thread connecting both extremities of the sausage.

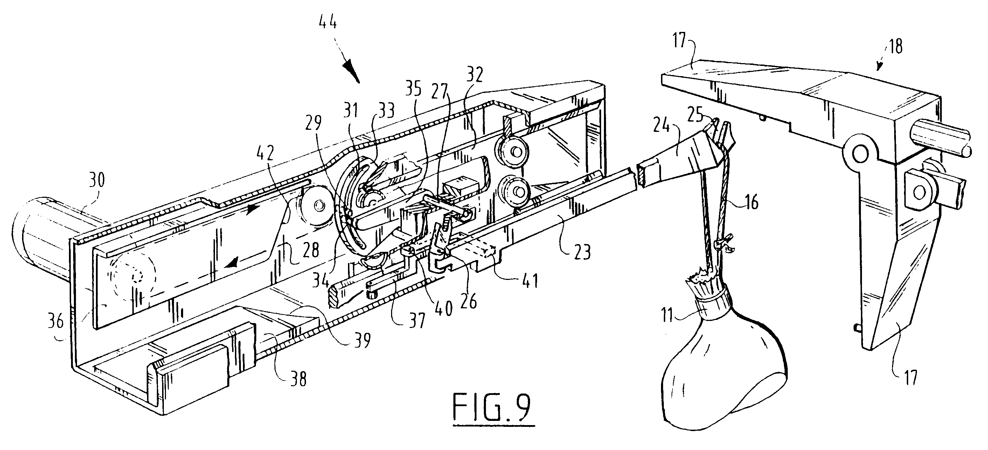

The held open suspending loop 16 is subsequently accepted by a transporting arm 23 of the threading device 2 (fig. 1, fig. 9). The outer end 24 of the transporting arm 23 displays a reversed V-shaped sectional profile so that also round sausages such as smoked sausages, the loop 16 of which does not lie directly in front of the transporting arm 23 when leaving the filling device 1, slide along the outer end 24 until their loop 16 falls into the notch 25.

The transporting arm 23 is pivotable about two shafts 26, 27 lying almost transversely of one another. The transporting arm 23 is driven by a power source 30 over a belt or chain 28 with a pin 29 fixed thereto. The pin 29 runs in a slot 31 arranged in a plate 33 connected to a carriage 32. A pin 34 of a drive arm 35 connected to the transporting arm 23 over the shaft 27 also runs in the slot 31. In the situation shown in fig. 9 the pin 29 will push the drive arm 35 downward whereby the transporting arm 23 assumes the position indicated. When the belt 28 moves further in the direction indicated with arrows, the drive arm 35 will be pushed slightly further downward, and the outer end 24 of the transporting arm 23 will therefore move slightly upward, whereafter the plate 33 is then pulled in the direction of the power source 30, whereby the carriage 32 and the transporting arm 23 arranged thereon likewise move in this direction. At a determined moment a control plate 36 will come between the drive arm 35 and the plate 33 with slot 31, whereby the pin 34 of the drive arm 35 is held in its lowest position.

At approximately the same moment a lever 37 likewise fixed to the carriage 32 will come into contact with a second control plate 38 and move further along the curved surface 39 of this control plate 38. The lever 37 hereby rotates around a shaft 40 and an extremity 41 of the lever 37 causes the transporting arm 23 to rotate around its shaft 26. At the extreme point of the rotation movement when the pin 29 is at its turning point, the suspending loop 16 is accepted by a transporting hook 43 (fig. 1).

When the pin 29 has passed its turning point and is moving again in the direction of the filling device 1, at a given time the pin 34 of the drive arm 35 will disengage from the underside of the first control plate 36, whereby the pin 34 and the drive arm 35 will move upward along the sloping side 42 of the first control plate 36 and the outer end 24 of the transporting arm 23 will consequently pivot downwards. The transporting arm 23 is then again ready to take a filled packaging 5 out of the filling device 1.

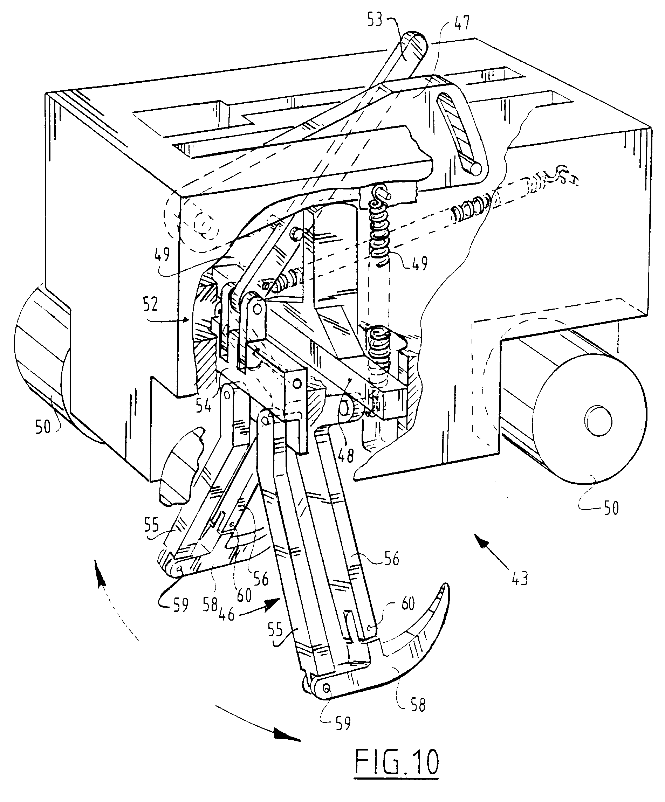

The transporting hook 43 (fig. 10) comprises two hook parts 46 movable relative to one another in the direction of the arrows and which are spread in the starting position but which, at the moment that a suspending loop 16 is transferred, are placed virtually against each other in order to be able to enter into the forked outer end 24 of the transporting arm 23 to accept the suspending loop 16. The closing movement of the hook parts 46 is realized by downward pivoting of a lever 47 which pushes down a T-piece 48 in engagement with the top side of the hook parts 46 counter to the action of two biasing springs 49. The lever 47 is pivoted downwards when the transporting hook 43, which is provided with four rollers 50, meets a protrusion arranged in a track 51 (fig. 1) in which it moves.

The transporting hook 43 further comprises a release device 52 consisting of a lever 53, a second T-piece 54 connected thereto and two legs 55, 56 of each hook part 46 which move relative to one another. When the lever 53 is pushed downward by a operating member 57 (fig. 1) present in the path of movement 51, the one leg 55 of each of the hook parts 46 is moved relative to the other leg 56 upward over the T-piece 54 connected to the lever 53. The feet 58 of the hook parts 46 thus pivot downwards around their pivot shafts 59, 60 whereby a suspending loop 16 carried on the transporting hook 43 can be released.

Once the transporting hook 43 has taken the filled packaging 5 from the transporting arm 23 of the transporting means 44 (fig. 1), the hook parts 46 movable relative to one another are spread, whereby the suspending loop 16 of the packaging 5 is firmly held open and in place. The threading is thus greatly simplified. In the case of round sausages, due to the spreading of the hook parts 46, the suspending loop is constrained to the middle and the sausage itself is oriented. The transporting hook 43 now moves on its rollers 50 along the track 51. The track 51 leads to a threading position 61 to which a carrier 62 has meanwhile been conveyed and lies ready to be filled. The transporting hook 43 is guided along the threading position 61 such that the suspending loop 16 of the packaging 5 is threaded onto the carrier 62. The threading position 61 is provided on its supply side with two supports 63 which can be successively folded away. When the levers 47 and 53 of the release device 52 of the transporting hook 43 come into contact with the operating member 57, the hook parts 46 are closed and the feet 58 of the transporting hook 43 pivot downwards, and the suspending loop 16 of the packaging 5 is suspended on the carrier 62. The operating member 57 now moves over a determined distance to the right in order to release the following packaging onto a following position along the carrier 62.

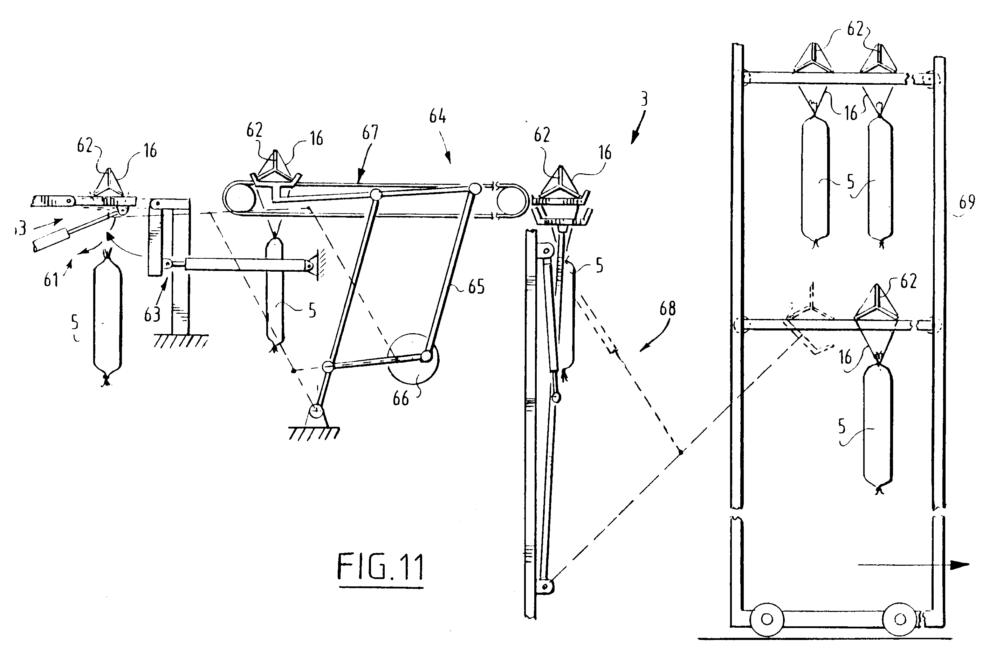

When a carrier 62 is completely filled with packagings 5, it is carried away from the threading position 61 by discharge means 64. The discharge means 64 (fig. 11) comprise two pivotable parallelograms 65 which are driven by a power source 66 and which place the carriers 62 on a belt conveyor 67. The conveyor 67 carries the filled carrier 62 to hanging means 68 which hang the carrier 62 in a rack 69. Also conceivable instead of the shown hanging means 68 is the use of so-called concertina arms arranged on vertically movable carriages.

When a filled carrier 62 is carried away an empty carrier 62 is supplied by supply means 70 (fig. 1) which comprise a belt conveyor 71 and a support member 73 driven by pistons 72 and movable towards the threading position 61.

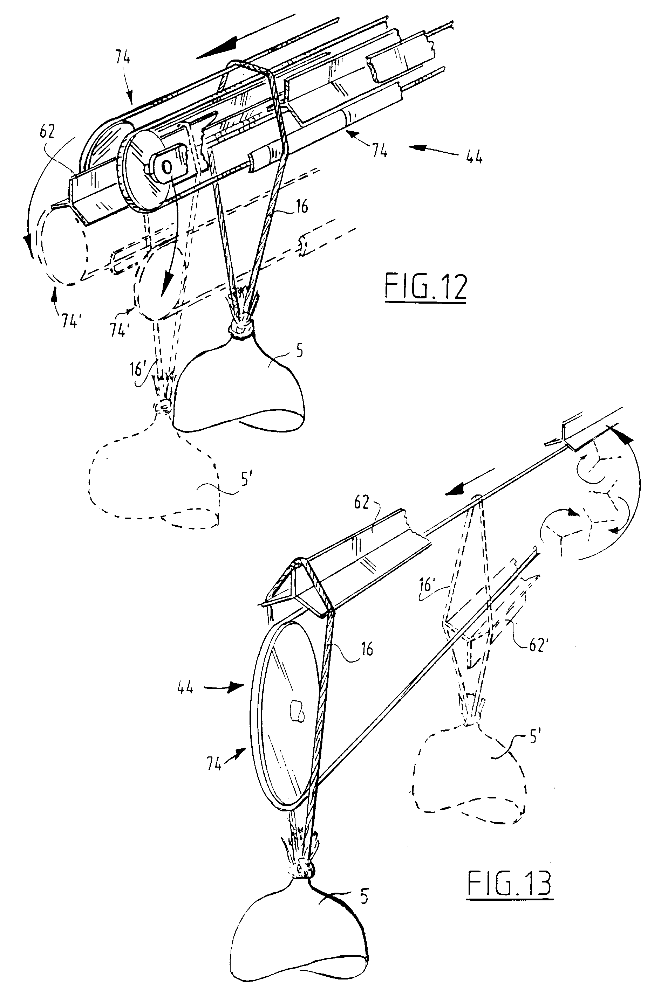

As indicated in fig. 12, the transporting means 44 can also comprise two conveyor belts 74 which transport the filled packagings 5 out of the filling device 1 and are placed on either side around a supplied carrier 62. The conveyor belts 74 can be movably received in a frame (not shown here) and when completely filled can be moved in the direction indicated by the arrows around the carrier 62, whereby the filled packagings 5 are suspended with their suspending loop 16 on the carrier 62. Because the suspending loop does not come into contact with the carrier 62 when threaded thus thereon, the possible danger, particularly with round sausages, that a part of the packaging 5 comes to rest on the carrier 62 does not occur.

In another embodiment (fig. 13) the transporting means 44 comprise a single conveyor belt 74 which moves above a supplied carrier 62'. When the conveyor belt 74 is entirely filled the carrier 62, which is arranged in a frame (not shown here), can roll as it were upwards in the manner indicated by arrows along the inside of the suspending loops 16 until the filled packagings 5 hang on the carrier 62. Here also no movement occurs between the carrier 62 and the suspending loop 16, so that the danger of a part of the packaging 5 coming to rest on the carrier 62 does not arise here either.

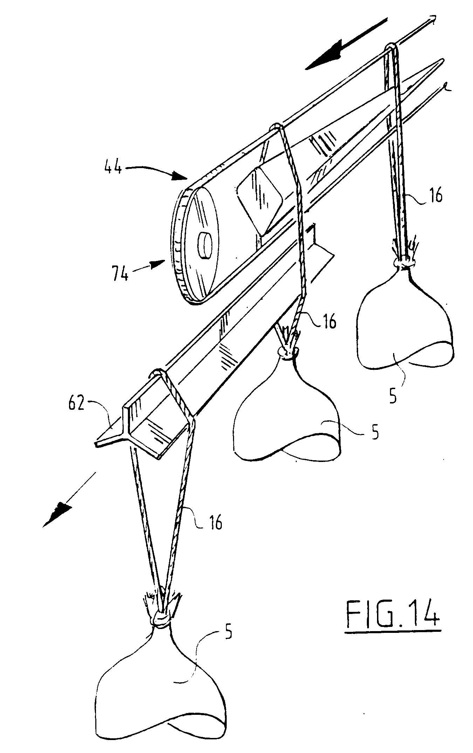

In yet another embodiment (fig. 14) the transporting means 44 comprise a single conveyor belt 74 which carries filled packagings 5 to a carrier 62 running beneath the conveyor belt 74 at a determined speed. When the suspending loops 16 reach the end of the conveyor belt 74 the filled packagings fall with their suspending loop 16 onto the carrier 62.

The supply means 70 and the discharge means 64 (fig. 1) can take a large form such that they have a buffer capacity, so that carriers 62 can for example be supplied in large numbers at one time and the process does not have to be stopped when a rack 69 is full and has to be changed.

The threading device 2 can also be provided with means for selectively releasing a filled packaging 5 before it is threaded onto a carrier 62. Thus for example packagings 5 which do not fulfil particular requirements can be removed from the process and random checks can also be made.

The filling, threading and hanging devices 1, 2, 3 can be of a modular construction.

## Claims

1. Method for preparing a packaged substance, in particular meat, for smoking and/or other treatment, comprising mechanically placing the substance in a plurality of packagings (5), mechanically closing each packaging (5) and fixing a suspending loop (16) thereto, mechanically opening each suspending loop (16) and picking up each closed packaging (5) on its suspending loop (16), mechanically transporting each packaging (5) to a supplied carrier (62) and threading each suspending loop (16) thereon by mechanically moving the suspending loop (16) to a predetermined position on the carrier, and finally mechanically discharging the filled carrier (62),
**characterized in that** each suspending loop (16) is held open from the moment it is fixed to the packaging (5), in that each packaging is separately picked up by its suspending loop (16) upon closure of the packaging (5), and in that the discharged carrier (62) is mechanically hung in a rack.

2. Method as claimed in claim 1, **characterized in that** during transport and threading each packaging (5) is handled exclusively by its attached suspending loop (16).

3. Method as claimed in claim 1 or 2, **characterized in that** the suspending loop (16) and the packaging (5) remain free of the carrier (62) during threading.

4. Method as claimed in any of the foregoing claims, **characterized in that** the carrier (62) is a standard carrier as used in the meat industry.

5. Method as claimed in any of the foregoing claims, **characterized in that** the carrier (62) is supplied and discharged transversely of its lengthwise direction.

6. Arrangement for preparing a packaged substance, in particular meat, for smoking and/or other treatment, comprising a device (1) known per se for mechanically filling a plurality of packagings (5) with the substance and fixing a suspending loop to each filled packaging (5), a device (2) placed in series with the mechanical filling device (1) for mechanically threading the filled packagings (5) onto carriers (62), comprising means for separately picking up each packaging (5) on an attached suspending loop (16) and moving it to a predetermined position on the carrier (62), and a device (3) placed in series with the mechanical threading device (2) for mechanically discharging the carriers, **characterized in that** the filling device (1) comprises means for attaching a suspending loop (16) to the packaging (5) and means (12, 13, 14, 15) co-acting with the suspending loop attachment means for holding the loop (16) open and for separately picking up each filled packaging (5) by its suspending loop (16), and in that the device for discharging the carriers (62) is arranged for mechanically hanging the carriers (62) in a rack (69)

7. Arrangement as claimed in claim 6, **characterized in that** the threading device (2) is arranged for handling each packaging exclusively by its attached suspending loop (16).

8. Arrangement as claimed in claim 6 or 7, **characterized in that** the holding open means (12-15) comprise a bending spring (12) co-acting with a mould (10) of the closing means (7) and a jaw (18) arranged in the vicinity of the mould.

9. Arrangement as claimed in any of the claims 6-8, **characterized in that** the threading device (2) comprises means (44) for separately transporting the filled, closed packagings (5) out of a discharge opening of the filling device (1) on their suspending loop and means (45) for placing the packagings (5) and the carriers (62) in the correct mutual position.

10. Arrangement as claimed in claim 9, **characterized in that** the transporting means (44) comprise a transporting arm (23) pivotable about at least one axis.

11. Arrangement as claimed in claim 11, **characterized in that** the transporting arm has a forked outer end (24) with reversed V-shaped sectional profile.

12. Arrangement as claimed in any of the claims 9-11, **characterized in that** the positioning means (45) comprise means (70) for supplying the carriers (62) to a threading position (61), and at least one transporting hook (43) movable along a track (51) connecting the transporting means (44) and the threading position (61).

13. Arrangement as claimed in claim 12**, characterized in that** the transporting hook (43) has at least two hook parts (46) movable relative to one another.

14. Arrangement as claimed in claim 12 or 13, **characterized in that** the transporting hook (43) comprises a controllable release device (52) and the positioning means (45) comprise an operating member (57) co-acting with the release device (52), the operating member (57) and the threading position (61) being displaceable relative to one another.

15. Arrangement as claimed in any of the claims 6-14**, characterized in that** the hanging device (3) comprises means (64) for discharging filled carriers (62) from the threading position (61) and means (68) for hanging the discharged carriers (62) at mutual spacings in a rack (69).

16. Arrangement as claimed in claim 15, **characterized in that** the discharging means (64) comprise at least one pivotable parallelogram (65).

17. Filling device (1) for use in the arrangement as claimed in any of the claims 6-16, **characterized by** means for attaching a suspending loop (16) to the packaging (5) and means (12, 13, 14, 15) co-acting with the suspending loop attachment means for holding the loop (16) open and for separately picking up each filled packaging (5) by its suspending loop (16).

18. Hanging device (3) for use in the arrangement as claimed in any of the claims 6-16, **characterized by** means (64) for discharging filled carriers (62) from the threading position (61), the discharging means (64) comprising at least one pivotable parallelogram (65), and by means (68) for hanging the discharged carriers (62) at mutual spacings in a rack.

## Patentansprüche

1. Verfahren zum Vorbereiten einer verpackten Substanz, insbesondere Fleisch, zum Räuchern und/oder für eine andere Behandlung, umfassend maschinelles Einbringen der Substanz in eine Vielzahl von Verpackungen (5), maschinelles Verschließen jeder Verpackung (5) und Befestigen einer Aufhängeschlaufe (16) daran, maschinelles Öffnen jeder Aufhängeschlaufe (16) und Aufnehmen jeder verschlossenen Verpackung (5) an ihrer Aufhängeschlaufe (16), maschinelles Transportieren jeder Verpackung (5) zu einem zugeführten Träger (62) und Auffädeln jeder Verpackung (5) darauf durch maschinelles Bewegen der Aufhängeschlaufe (16) zu einer vorgegebenen Position auf dem Träger (62), und zum Schluß maschinelles Absetzen des vollen Trägers (62), **dadurch gekennzeichnet,** daß jede Aufhängeschlaufe (16) von dem Moment an, in welchem sie an der Verpackung befestigt wird, offen gehalten wird, daß jede Verpackung mittels ihrer Aufhängeschlaufe (16) nach Verschluß der Verpackung (5) getrennt aufgenommen wird, und daß der abgesetzte Träger (62) maschinell in ein Gestell eingehängt wird.

2. Verfahren nach Anspruch 1, **dadurch gekennzeichnet,** daß jede Verpackung (5) während des Transports und des Auffädelns ausschließlich durch ihre zugehörige Aufhängeschlaufe (16) befördert wird.

3. Verfahren nach Anspruch 1 oder 2**, dadurch gekennzeichnet,** daß die Aufhängeschlaufe (16) und die Verpackung (5) während des Auffädelns frei von dem Träger (62) bleiben.

4. Verfahren nach einem der vorhergehenden Ansprüche, **dadurch gekennzeichnet,** daß der Träger (62) ein Standardträger ist, wie er in der Fleischindustrie verwendet wird.

5. Verfahren nach einem der vorhergehenden Ansprüche, **dadurch gekennzeichnet,** daß der Träger (62) quer zu seiner Längsrichtung zugeführt und abgesetzt wird.

6. Anordnung zum Vorbereiten einer verpackten Substanz, insbesondere Fleisch, zum Räuchern und/oder für eine andere Behandlung, umfassend eine an sich bekannte Einrichtung (1) zum maschinellen Füllen einer Vielzahl von Verpackungen (5) mit der Substanz und zum Befestigen einer Aufhängeschlaufe an jede gefüllte Verpackung (5), eine in Reihe mit der maschinellen Fülleinrichtung (1) zum maschinellen Auffädeln der gefüllten Verpackungen (5) auf Träger (62) angeordnete Einrichtung (2), welche Mittel zum getrennten Aufnehmen jeder Verpackung (5) an einer zugehörigen Aufhängeschlaufe (16) und zum Bewegen dieser zu einer vorgegebenen Position auf dem Träger (62) umfaßt, und eine Einrichtung (3), welche in Reihe mit der maschinellen Auffädeleinrichtung (2) zum maschinellen Absetzen der Träger angeordnet ist, **dadurch gekennzeichnet,** daß die Fülleinrichtung (1) Mittel zum Befestigen einer Aufhängeschlaufe (16) an der Verpackung (5) und Mittel (12, 13, 14, 15) umfaßt, welche mit den Befestigungsmitteln für die Aufhängeschlaufe zum Offenhalten der Schlaufe (16) und zum getrennten Aufnehmen der gefüllten Verpackung (5) durch ihre Aufhängeschlaufe (16) zusammenwirken, und daß die Einrichtung zum Absetzen der Träger (62) zum maschinellen Einhängen der Träger (62) in ein Gestell (69) eingerichtet ist.

7. Anordnung nach Anspruch 6, **dadurch gekennzeichnet,** daß die Auffädeleinrichtung (2) zur ausschließlichen Beförderung jeder Verpackung durch ihre zugehörige Aufhängeschlaufe (16) eingerichtet ist.

8. Anordnung nach Anspruch 6 oder 7, **dadurch gekennzeichnet,** daß die Mittel (12-15) zum Offenhalten eine Biegefeder (12), welche mit einer Form (10) der Mittel (7) zum Verschließen zusammenwirkt, und eine Klaue (18), welche in der Nähe der Form angeordnet ist, umfassen.

9. Anordnung nach einem der Ansprüche 6 - 8, **dadurch gekennzeichnet,** daß die Auffädeleinrichtung (2) Mittel (44) zum getrennten Transport der gefüllten, verschlossenen Verpackungen (5) aus einer Ausstoßöffnung der Fülleinrichtung (1) an ihrer Aufhängeschlaufe und Mittel (45) zum Plazieren der Verpackungen (5) und der Träger (62) in die richtige gegenseitige Position umfaßt.

10. Anordnung nach Anspruch 9, **dadurch gekennzeichnet,** daß die Transportmittel (44) einen Transportarm (23) enthalten, welcher mindestens um eine Achse drehbar ist.

11. Anordnung nach Anspruch 10, **dadurch gekennzeichnet,** daß der Transportarm ein gabelförmiges äußeres Ende (24) mit einem umgekehrten V-förmigen Schnittprofil besitzt.

12. Anordnung nach einem der der Ansprüche 9 - 11, **dadurch gekennzeichnet,** daß die Positionierungsmittel (45) Mittel (70) zum Zuführen der Träger (62) in eine Auffädelposition (61) und mindestens einen Transporthaken (43), welcher entlang einer Bahn (51), welche die Transportmittel (44) und die Auffädelposition (61) verbindet, verschiebbar ist, umfassen.

13. Anordnung nach Anspruch 12, **dadurch gekennzeichnet,** daß der Transporthaken (43) mindestens zwei Hakenteile (46), welche relativ zueinander bewegbar sind, besitzt.

14. Anordnung nach Anspruch 12 oder 13, **dadurch gekennzeichnet,** daß der Transporthaken (43) eine steuerbare Freigabeeinrichtung (52) umfaßt, und daß die Positionierungsmittel (45) ein Funktionsteilsteil (57) umfassen, welches mit der Freigabeeinrichtung (52) zusammenwirkt, wobei das Funktionsteil (57) und die Auffädelposition (61) relativ zueinander verschiebbar sind.

15. Anordnung nach einem der Ansprüche 6 - 14, **dadurch gekennzeichnet,** daß die Einhängeeinrichtung (3) Mittel (64) zum Absetzen voller Träger (62) aus der Auffädelposition (61) und Mittel (68) zum Einhängen der abgesetzten Träger (62) mit gegenseitigen Abständen in einem Gestell (69) umfaßt.

16. Anordnung nach Anspruch 15, **dadurch gekennzeichnet,** daß die Absetzmittel (64) mindestens ein schwenkbares Parallelogramm umfassen.

17. Fülleinrichtung (1) zur Verwendung in der Anordnung nach einem der Ansprüche 6 - 16, **gekennzeichnet durch** Mittel zum Befestigen einer Aufhängeschlaufe (16) an die Verpackung (5) und Mittel (12, 13, 14, 15), welche mit den Befestigungsmitteln der Aufhängeschlaufe zum Offenhalten der Schlaufe (16) und zum getrennten Aufnehmen jeder gefüllten Verpackung (5) durch ihre Aufhängeschlaufe (16) zusammenwirken.

18. Einhängeeinrichtung (3) zur Verwendung in der Anordnung nach einem der Ansprüche 6 - 16, **gekennzeichnet durch** Mittel (64) zum Absetzen voller Träger (62) aus der Auffädelposition, wobei die Absetzmittel (64) mindestens ein drehbares Parallelogramm (65) umfassen, und durch Mittel (68) zum Einhängen der abgesetzten Träger (62) mit gegenseitigen Abständen in einem Gestell.

## Revendications

1. Procédé de préparation d'une substance emballée, en particulier de la viande, pour le fumage et/ou un autre traitement, comprenant le fait de placer mécaniquement la substance dans une pluralité d'emballages (5), le fait de fermer mécaniquement chaque emballage (5) et d'y fixer une boucle de suspension (16), le fait d'ouvrir mécaniquement chaque boucle de suspension (16) et de saisir chaque emballage (5) fermé sur sa boucle de suspension (16), le fait d'acheminer chaque emballage (5) vers un support (62) chargé et d'enfiler chaque boucle de suspension (16) dessus en déplaceant mécaniquement la boucle de suspension (16) vers un emplacement prédéterminé sur le support, et finalement le fait de décharger mécaniquement le support (62) garni, caractérisé en ce que chaque boucle de suspension (16) est maintenue ouverte depuis le moment où elle est fixée sur l'emballage (5), dans la mesure où chaque emballage est saisi séparément par sa boucle de suspension (16) après fermeture de l'emballage (5) et où le support (62) déchargé est suspendu mécaniquement dans un râtelier.

2. Procédé selon la revendication 1, caractérisé en ce que, lors du transport et de l'enfilage, chaque emballage (5) est manipulé exclusivement par sa boucle de suspension (16) attachée.

3. Procédé selon la revendication 1 ou 2, caractérisé en ce que la boucle de suspension (16) et l'emballage (5) restent hors du support (62) lors de l'enfilage.

4. Procédé selon l'une quelconque des revendications précédentes, caractérisé en ce que le support (62) est un support standard tel qu'utilisé dans l'industrie de la viande.

5. Procédé selon l'une quelconque des revendications précédentes, caractérisé en ce que le support (62) est chargé et déchargé de façon transversale à sa direction longitudinale.

6. Ensemble de préparation d'une substance emballée, en particulier de la viande, pour le fumage et/ou un autre traitement, comprenant un dispositif (1) connu en soi permettant de remplir mécaniquement une pluralité d'emballages (5) avec la substance et de fixer une boucle de suspension sur chaque emballage (5) rempli, un dispositif (2) monté en série avec le dispositif de remplissage mécanique (1), permettant d'enfiler mécaniquement les emballages (5) remplis sur des supports (62), comprenant des moyens permettant de saisir séparément chaque emballage (5), par une boucle de suspension (16) attachée, et de la déplacer vers un emplacement prédéterminé sur le support (62), et un dispositif (3) monté en série avec le dispositif d'enfilage (2) mécanique, permettant de décharger mécaniquement les supports, caractérisé en ce que le dispositif de remplissage (1) comprend des moyens permettant d'attacher une boucle de suspension (16) sur l'emballage (5) et des moyens (12, 13, 14, 15), coopérant avec les moyens de fixation de la boucle de suspension, permettant de maintenir la boucle (16) ouverte et de saisir séparément chaque emballage (5) rempli par sa boucle de suspension (16), et en ce que le dispositif de déchargement des supports (62) est conçu pour suspendre mécaniquement les supports (62) dans un râtelier (69).

7. Ensemble selon la revendication 6, caractérisé en ce que le dispositif d'enfilage (2) est conçu pour manipuler chaque emballage exclusivement par sa boucle de suspension (16) attachée.

8. Ensemble selon la revendication 6 ou 7, caractérisé en ce que les moyens (12-15) permettant de maintenir ouvert comprennent un ressort de flexion (12) coopérant avec un moule (10) des moyens de fermeture (7) et une mâchoire (18) disposée à proximité du moule.

9. Ensemble selon l'une quelconque des revendications 6-8, caractérisé en ce que le dispositif d'enfilage (2) comprend des moyens (44) permettant d'acheminer séparément les emballages (5) remplis et fermés hors d'une ouverture de déchargement du dispositif de remplissage (1), par leur boucle de suspension, et des moyens (45) permettant de placer les emballages (5) et les support (62) dans la bonne position réciproque.

10. Ensemble selon la revendication 9, caractérisé en ce que les moyens d'acheminement (44) comprennent un bras de transport (23) susceptible de pivoter autour d'au moins un axe.

11. Ensemble selon la revendication 10, caractérisé en ce que le bras de transport possède une extrémité extérieure en forme de fourche (24) présentant un profil en forme de V renversé.

12. Ensemble selon l'une quelconque des revendications 9-11, caractérisé en ce que les moyens de positionnement (45) comprennent des moyens (70) d'amener les supports (62) dans un emplacement d'enfilage (61), et au moins un crochet de transport (43) susceptible de se déplacer sur une piste (51) reliant les moyens d'acheminement (44) et l'emplacement d'enfilage (61).

13. Ensemble selon la revendication 12, caractérisé en ce que le crochet de transport (43) possède au moins deux parties crochetées (46) mobiles l'une par rapport à l'autre.

14. Ensemble selon la revendication 12 ou 13, caractérisé en ce que le crochet de transport (43) comprend un dispositif de détachement (52) susceptible d'être commandé et les moyens de positionnement (45) comprennent un élément opératoire (57) coopérant avec le dispositif de détachement (52), l'élément opératoire (57) et l'emplacement d'enfilage (61) pouvant être déplacés l'un par rapport à l'autre.

15. Ensemble selon l'une quelconque des revendications 6-14, caractérisé en ce que le dispositif de suspension (3) comprend des moyens (64) de déchargement des supports (62) remplis hors de l'emplacement d'enfilage (61) et des moyens (68) permettant de suspendre les supports (62) déchargés de façon espacée dans un râtelier (69).

16. Ensemble selon la revendication 15, caractérisé en ce que les moyens (64) de déchargement comprennent au moins un parallélogramme (65) pivotant.

17. Dispositif de remplissage (1) destiné à être utilisé dans l'ensemble selon l'une quelconque des revendications 6-16, caractérisé par des moyens permettant de fixer une boucle de suspension (16) sur l'emballage (5) et des moyens (12, 13, 14, 15) coopérant avec les moyens de fixation de la boucle de suspension afin de maintenir la boucle (16) ouverte et de saisir séparément chaque emballage (5) rempli par sa boucle de suspension (16).

18. Dispositif de suspension (3) destiné à être utilisé dans l'ensemble selon l'une quelconque des revendications 6-16, caractérisé par des moyens (64) permettant de décharger des supports (62) remplis hors de l'emplacement d'enfilage (61), les moyens de déchargement (64) comprenant au moins un parallélogramme (65) pivotant, et par des moyens (68) permettant de suspendre les supports (62) déchargés de façon espacée dans un râtelier.
